# EUROPEAN PATENT APPLICATION

(11) **EP 1 804 324 A1**
(43) Date of publication of application: **04.07.2007**
(21) Application number: 06027018.8
(22) Date of filing: 28.12.2006
(51) Int. Cl.: H01M 8/04, H01M 8/10, H01M 16/00

(54) **Direct Methanol Fuel cell system and operating method for shutdown**

(30) Priority: 28.12.2005 JP 2005379564
(71) Applicant: YAMAHA HATSUDOKI KABUSHIKI KAISHA, Iwata-shi, Shizuoka-ken 438-8501 (JP)
(72) Inventor: Muramatsu, Yasuyuki, Iwata-shi, Shizuoka-ken (JP)
(74) Representative: Grünecker, Kinkeldey, Stockmair & Schwanhäusser Anwaltssozietät

(57) **Abstract**

A fuel cell system and an operating method thereof capable of reliably reducing fuel crossover and electrolyte film deterioration is provided. A fuel cell system (100) includes: a fuel cell (104) which includes an electrolyte film (104a); aqueous solution circulation means which provides circulatory supply of aqueous methanol solution to the fuel cell (104); fuel supply means which supplies the aqueous solution circulation means with methanol fuel that has a concentration not lower than that of the aqueous methanol solution; and a main switch (152). After the main switch (152) is turned OFF, a CPU (172) controls fuel supply operation of the fuel supply means so that the amount of fuel supply to the aqueous solution circulation means is decreased. Thereafter, power generation operation of the fuel cell (104) is controlled so that the power generation is stopped, with the concentration of aqueous methanol solution lower than before the main switch (152) was turned OFF. The produced energy during shutdown is stored in a secondary battery.

## Description

### BACKGROUND OF THE INVENTION

### Field of the Invention

The present invention relates to fuel cell systems and operating methods thereof. More specifically, the present invention relates to a direct methanol fuel cell system which controls a process for stopping power generation in the fuel cell, and an operating method thereof.

### Description of the Related Art

An example of the related art of this kind is disclosed in JP-A 2004-214004.

The above example discloses a technique in which power generation is continued for a predetermined amount of time even after stopping supply of aqueous methanol solution from a liquid supply pump, thereby decreasing the amount of methanol remaining in a power generation section.

However, according to the technique described in JP-A 2004-214004, circulation of the aqueous methanol solution is stopped when the liquid supply pump is stopped. If the power generation is continued under this situation, there is a risk of having a non-uniform concentration of aqueous methanol solution in the power generation section, particularly in the electrolyte film surface. This phenomenon results because oxygen concentration is higher at a cathode air supply inlet in the power generation section than at the outlet thereof, causing more active reaction on the air supply inlet side. As a result, the electrolyte film, which is supposed to have a uniform electric potential, actually has a non-uniform electric potential, leading to accelerated deterioration of the electrolyte film.

Further, if power generation is continued for a certain amount of time without driving the liquid supply pump, concentration of the aqueous methanol solution which is supplied to the fuel cell decreases, resulting in concentration difference in the aqueous methanol solution between the fuel tank side of the liquid supply pump and the fuel cell side thereof. If this condition is not corrected after the power generation is stopped, the concentration gradient will cause methanol diffusion, allowing methanol to move from the fuel tank side and enter the fuel cell side through the liquid supply pump, so as to increase the methanol concentration on the fuel cell side. As a result, there is a risk that methanol crossover is not reduced sufficiently.

### SUMMARY OF THE INVENTION

Therefore, a primary object of the present invention is to provide a fuel cell system and an operating method thereof, which are capable of reliably reducing fuel crossover and deterioration of the electrolyte film.

According to an aspect of the present invention, there is provided a fuel cell system which includes: a fuel cell including an electrolyte film, for generation of electric energy by electrochemical reactions; aqueous solution circulation means for circulatory supply of aqueous fuel solution to the fuel cell; fuel supply means for supplying the aqueous solution circulation means with fuel which has a concentration not lower than that of the aqueous fuel solution; instruction means for issuing an instruction to stop power generation in the fuel cell; first control means for controlling fuel supply operation of the fuel supply means to decrease an amount of fuel supply to the aqueous solution circulation means while continuing circulation of the aqueous fuel solution and the power generation after an issuance of the instruction from the instruction means to stop power generation; and second control means for controlling power generation operation of the fuel cell to stop power generation at a concentration of the aqueous fuel solution lower than before the issuance of the instruction to stop power generation, after a decrease in the amount of fuel supply to the aqueous solution circulation means.

According to another aspect of the present invention, there is provided a method of operating a fuel cell system which includes: a fuel cell including an electrolyte film; and aqueous solution circulation means for circulatory supply of aqueous fuel solution to the fuel cell; and is capable of supplying the aqueous solution circulation means with fuel having a concentration not lower than that of the aqueous fuel solution. The method includes: a first step of continuing power generation in the fuel cell while continuing the circulation of aqueous fuel solution with a decreased amount of fuel supply to the aqueous solution circulation means after an issuance of an instruction to stop power generation in the fuel cell; and a second step, thereafter, of stopping the power generation in the fuel cell at a concentration of the aqueous fuel solution lower than before the issuance of the instruction to stop power generation.

According to the present invention, power generation is continued after an issuance of an instruction to stop the power generation, with a decreased amount of fuel supply to the aqueous solution circulation means and thereafter, the power generation in the fuel cell is stopped, with a concentration of the aqueous fuel solution being lower than before the issuance of the instruction to stop the power generation. The fuel cell system is a system in which aqueous fuel solution is circulated. Therefore, continued power generation with decreased amount of fuel supply to the aqueous solution circulation means decreases the concentration of aqueous methanol solution generally uniformly in the entire amount of aqueous fuel solution which is in circulation. Therefore, it is possible to make sure that the concentration of aqueous fuel solution supplied to the fuel cell is lower than before the issuance of the instruction to stop the power generation when stopping power generation in the fuel cell, and to reduce non-uniformity of the concentration of aqueous fuel solution in the electrolyte film surface thereby reducing fuel crossover and deterioration of the electrolyte film.

Preferably, the fuel cell system further includes a secondary battery charged by the fuel cell, and power generation operation in the fuel cell is controlled based on an amount of charge in the secondary battery. In this case, by stopping power generation in the fuel cell when the amount of charge in the secondary battery has reached a predetermined value, the system can start up reliably the next time it is used.

Further preferably, power generation operation of the fuel cell is controlled, based on the concentration of the aqueous fuel solution supplied to the fuel cell. In this case, deterioration of the electrolyte film is reduced reliably by stopping power generation in the fuel cell when the concentration of the aqueous fuel solution has become lower than a predetermined concentration.

Further, preferably, a first energy is calculated as an amount of charge necessary for charging the secondary battery to a predetermined value, a second energy is calculated as an amount of power generation capable of charging the secondary battery using the aqueous fuel solution in the aqueous solution circulation means, and fuel supply operation of the fuel supply means is controlled based on a comparison of the first energy and the second energy. In this case, when the first energy becomes not greater than the second energy, the amount of fuel supply to the aqueous solution circulation means is decreased while power generation is continued. This normally enables to charge the secondary battery up to a predetermined value when power generation is stopped.

Preferably, the fuel cell system further includes storage means for storing the second energy. This enables to use a stored value as the second energy for comparison with the first energy, eliminating the need for calculating the second energy.

Further preferably, the calculation of the first energy is based on the amount of charge in the secondary battery. This enables to calculate the first energy easily.

Further, preferably, the calculation of the second energy is based on the amount of the aqueous solution in the aqueous solution circulation means and the concentration of the aqueous fuel solution. This enables to calculate the second energy easily.

Preferably, the calculation of the second energy takes into account electric power consumed in power generation in the fuel cell.

Power generation by the fuel cell requires operation of system components such as an aqueous solution pump that supplies aqueous fuel solution to the electrodes and an air pump that supplies air that includes oxygen. By taking the power consumption for power generation by the fuel cell into account as described above, i.e. by virtually subtracting the amount of energy that is equal to the amount of power consumed in order to generate power in the fuel cell from the amount of energy stored in the aqueous fuel solution in the aqueous solution circulation means, the second energy can be calculated more accurately.

Further preferably, the aqueous solution circulation means is controlled to increase an amount of supply of the aqueous fuel solution to the fuel cell after the issuance of the instruction from the instruction means to stop power generation. By increasing the amount of supply of the aqueous fuel solution to the fuel cell, it is possible to prevent deterioration of the electrolyte film due to shortage of fuel supply.

Further preferably, the fuel cell system further includes water supply means for supplying water to the aqueous solution circulation means, and third control means for controlling water supply operation of the water supply means to decrease an amount of water supply to the aqueous solution circulation means after the issuance of the instruction from the instruction means to stop power generation. In this case, it becomes possible to continue power generation with a decreased amount of water supply to the aqueous solution circulation means after receiving the instruction to stop power generation, thereby to decrease concentration change in the aqueous fuel solution caused by the added water, making possible to eliminate such a problem that power generation by the fuel cell is stopped before the secondary battery has been charged sufficiently.

Further, preferably, the fuel supply operation of the fuel supply means is controlled based on presence or absence of a connection between the fuel cell system and an external power source provided to charge the secondary battery. In this case, the amount of fuel supply to the aqueous solution circulation means is decreased when the external power source is connected with the fuel cell system. By prioritizing the charging by the external power source as described above and decreasing the amount of fuel supply accordingly, unnecessary consumption of the fuel can be eliminated.

In motorbikes and other transportation equipment which includes a fuel cell system, it is important to reduce crossover of aqueous fuel solution and deterioration of the electrolyte film. Therefore, the present invention can be used suitably in motorbikes and other transportation equipment that includes a fuel cell system.

It should be noted here that "decrease" in the amount of fuel or water supply includes not only lowering the amount of supply but also reducing the amount to zero (stopping the supply).

The above-described object, other objects, characteristics, aspects and advantages of the present invention will become more apparent from the following detailed description of embodiments to be made with reference to the attached drawings.

### BRIEF DESCRIPTION OF THE DRAWINGS

Fig. 1 is a left side view of a motorbike according to an embodiment of the present invention.
Fig. 2 is a perspective view taken from front left, showing how the fuel cell system is mounted on a motorbike frame.
Fig. 3 is a perspective view taken from rear left, showing how the fuel cell system is mounted on the motorbike frame.
Fig. 4 is a left side view showing piping in the fuel cell system.
Fig. 5 is a right side view showing the piping in the fuel cell system.
Fig. 6 is perspectives view taken from front left, showing the piping in the fuel cell system.
Fig. 7 is a perspective view taken from front right, showing the piping in the fuel cell system.
Fig. 8 is a diagram of a fuel cell stack.
Fig. 9 is a diagram of an individual fuel cell.
Fig. 10 is a system diagram showing piping of the fuel cell system.
Fig. 11 is a block diagram showing an electrical configuration of the fuel cell system.
Fig.12 is a diagram for describing charge rates of a secondary battery.
Fig.13 is a flowchart showing an example of operation in an embodiment of the present invention.
Fig.14 is a flowchart which shows a continued portion of the operation from Fig. 13.

### DETAILED DESCRIPTION OF PREFERRED EMBODIMENTS

Hereinafter, preferred embodiments of the present invention will be described, with reference to the drawings. The embodiments are cases in which a fuel cell system 100 according to the present invention is equipped in a motorbike 10 as an example of transportation equipment.

The description will first cover the motorbike 10. It is noted that the terms left and right, front and rear, up and down as used in the embodiments of the present invention are determined from the normal state of riding, i.e., as viewed by the rider sitting on the rider's seat of the motorbike 10, with the rider facing toward a handle 24.

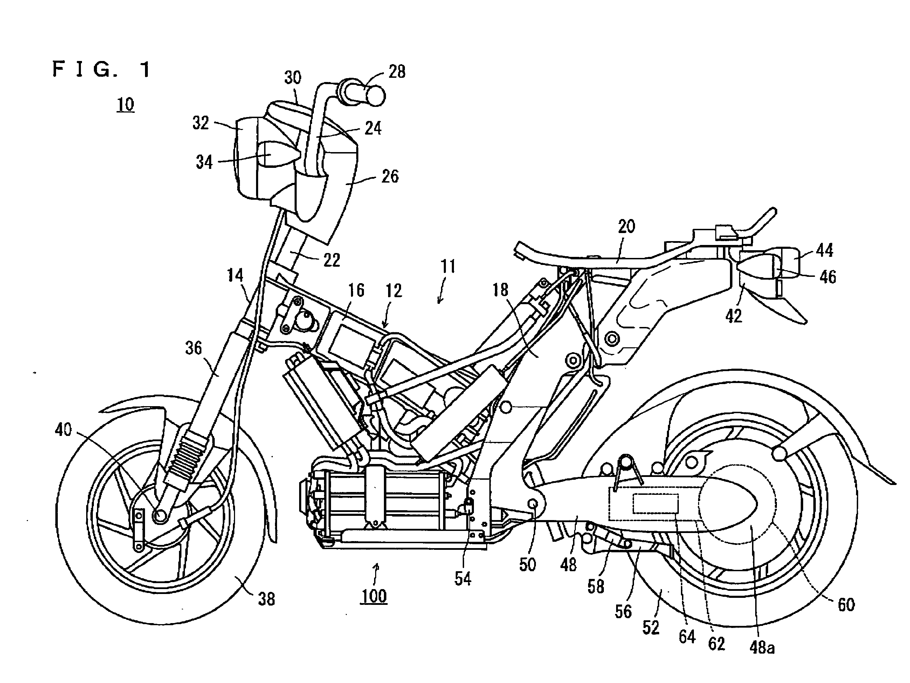

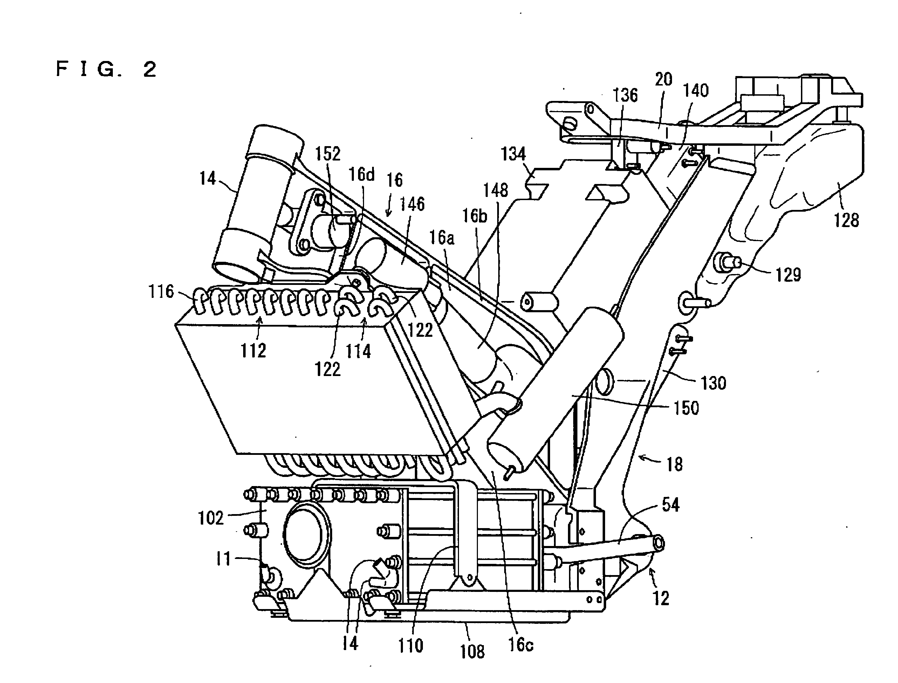

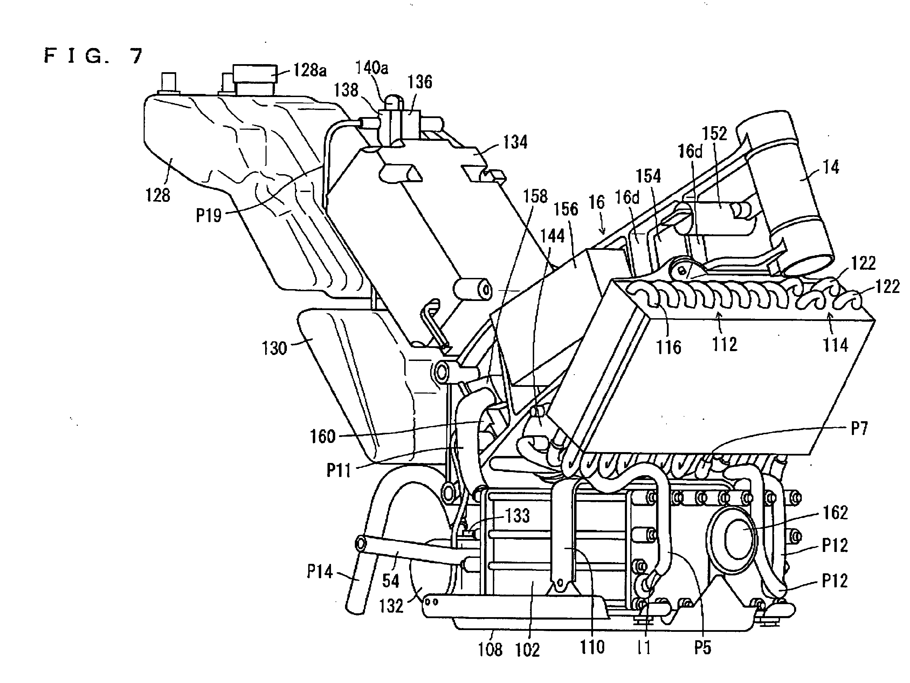

Referring to Fig. 1 through Fig. 7, the motorbike 10 includes a vehicle body 11. The vehicle body 11 has a vehicle frame 12. The vehicle frame 12 includes a head pipe 14, a front frame 16 which has an I-shaped vertical section and extends in a rearward and downward direction from the head pipe 14, a rear frame 18 which is connected with a rear end of the front frame 16 and rising in a rearward and upward direction, and a seat rail 20 which is attached to a top end of the rear frame 18. The front frame 16 has its rear end connected with a location on the rear frame 18 which is close to but slightly away from a center portion of the rear frame 18 toward a lower end. The front frame 16 and the rear frame 18 combine to form a substantially Y-shaped structure as viewed from the side.

The front frame 16 includes: a plate member 16a which has a width in the vertical directions and extends in a rearward and downward direction, perpendicularly to the lateral directions of the vehicle; flanges 16b, 16c which are formed respectively at an upper end edge and a lower end edge of the plate member 16a, extend in a rearward and downward direction and have a width in the lateral directions; reinforcing ribs 16d protruding from both surfaces of the plate member 16a; and a connecting region 16e at a rear end for connecting the rear frame 18 with bolts for example. The reinforcing ribs 16d and the flanges 16b, 16c serve as storage walls, providing compartments on both surfaces of the plate member 16a as storage spaces for components of a fuel cell system 100 to be described later.

The rear frame 18 includes: plate members 18a, 18b which extend in a rearward and upward direction, have a width in the front and rear directions, and sandwich the connecting region 16e of the front frame 16; and a plate member (not illustrated) which connects the plate members 18a and 18b.

As shown in Fig. 1, a steering shaft 22 is pivotably inserted in the head pipe 14 for steering the vehicle. A handle support 26 is provided at an upper end of the steering shaft 22, to which a handle 24 is fixed. Grips 28 are provided at both ends of the handle 24. The right-hand grip 28 serves as a rotatable throttle grip.

A display/operation board 30 is provided in front of the handle 24 of the handle support 26. The display/operation board 30 is an integrated dashboard including a meter 30a for measuring and displaying various data concerning an electric motor 60 (to be described later), a display portion 30b provided by e.g. a liquid crystal display, for providing the rider with a variety of information concerning the riding conditions, and input portion 30c for inputting a variety of information. A head lamp 32 is provided below the display/operation board 30 at the handle support 26, and a flasher lamp 34 is provided on each of the left and right sides of the head lamp 32.

A pair of left and right front forks 36 extend downwardly from a bottom end of the steering shaft 22. Each of the front forks 36 includes a bottom end supporting a front wheel 38 via a front wheel shaft 40. The front wheel 38 is suspended by the front forks 36, and is freely rotatable around the front wheel shaft 40.

On the other hand, a frame-like seat rail 20 is attached to a rear end of the rear frame 18. The seat rail 20 is fixed on an upper end of the rear frame 18 by welding for example, generally in the front and rear directions. An unillustrated seat is provided pivotably on the seat rail 20. A mounting bracket 42 is fixed to a rear end of the seat rail 20. The mounting bracket 42 supports a tail lamp 44 and a pair of left and right flasher lamps 46.

The rear frame 18 includes a lower end which pivotably supports a swing arm (rear arm) 48 via a pivot shaft 50. The swing arm 48 has a rear end 48a which rotatably supports a driving wheel i.e., a rear wheel 52, on a shaft via an electric motor 60 (to be described later). The swing arm 48 and the rear wheel 52 are suspended with an unillustrated rear cushion with respect to the rear frame 18.

A pair of footrest attaching bars 54 are provided at a lower front portion of the rear frame 18, to protrude in the left and right directions from the rear frame 18 respectively. An unillustrated footrest is attached to each of the footrest attaching bars 54. Behind the footrest attaching bars 54, a main stand 56 is pivotably supported by the swing arm 48. The main stand 56 is biased in a closing direction by a return spring 58.

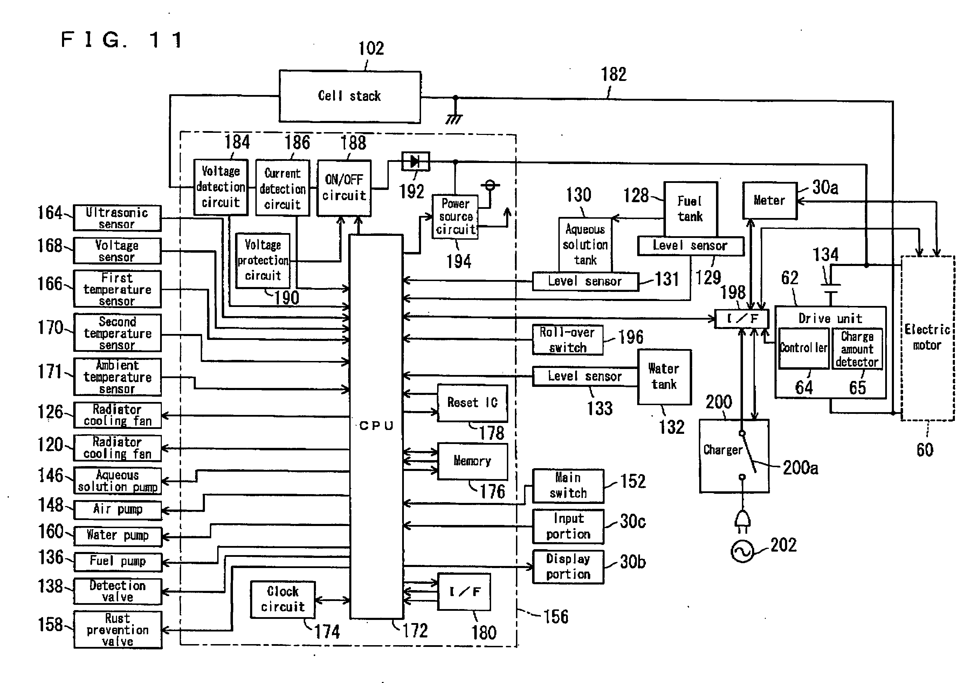

In the present embodiment, the swing arm 48 is provided therein with an electric motor 60 of an axial gap type, for example, which is connected with the rear wheel 52 to rotate the rear wheel 52, and a drive unit 62 which is electrically connected with the electric motor 60. Referring also to Fig. 11, the drive unit 62 includes a controller 64 for controlling the rotating drive of the electric motor 60, and a charge amount detector 65 for detecting the amount of charge in a secondary battery 134 (to be described later).

The vehicle body 11 of the motorbike 10 as described is equipped with a fuel cell system 100 along the vehicle frame 12. The fuel cell system 100 generates electric energy for driving the electric motor 60 and other components.

Hereinafter, the fuel cell system 100 will be described.

The fuel cell system 100 is a direct methanol fuel cell system which uses methanol (an aqueous solution of methanol) directly without reformation for power generation.

The fuel cell system 100 includes a fuel cell stack (hereinafter simply called cell stack) 102 mounted below the front frame 16.

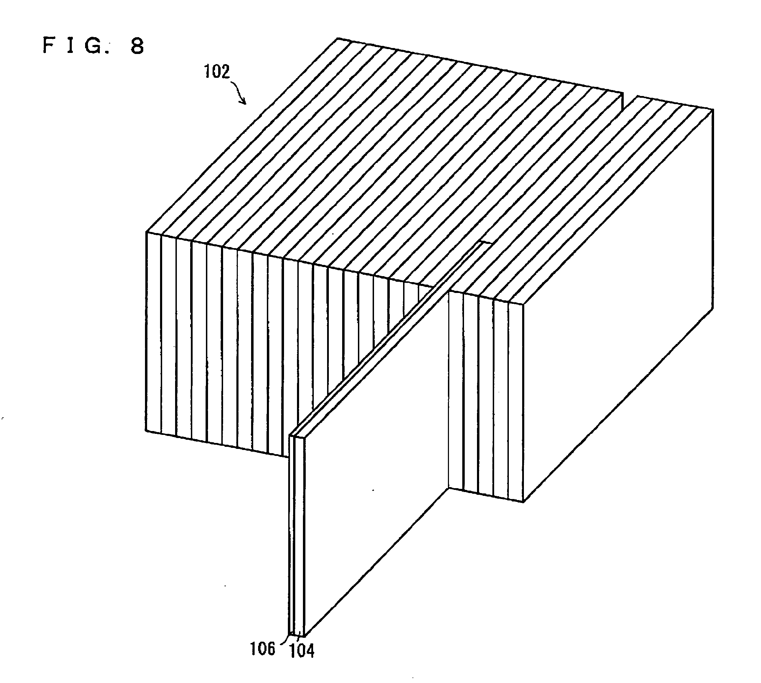

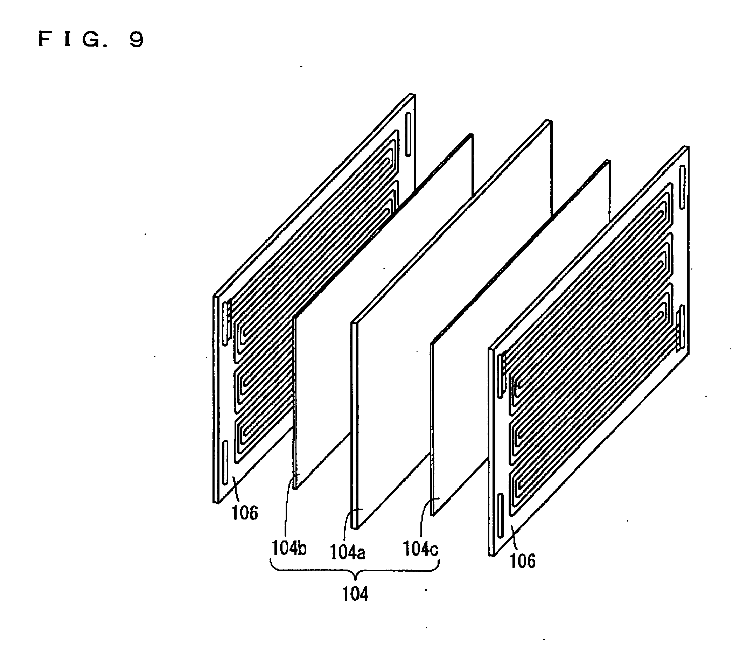

As shown in Fig. 8 and Fig. 9, the cell stack 102 includes a plurality of fuel cells (individual fuel cells) 104 layered (stacked) in alternation with separators 106. Each fuel cell 104 is capable of generating electric energy through electrochemical reactions between hydrogen ions and oxygen based on methanol. Each fuel cell 104 in the cell stack 102 includes electrolyte film 104a provided by a solid polymer film for example, and a pair of an anode (fuel electrode) 104b and a cathode (air electrode) 104c opposed to each other, with the electrolyte film 104a in between. The anode 104b and the cathode 104c each include a platinum catalyst layer provided on the side closer to the electrolyte film 104a.

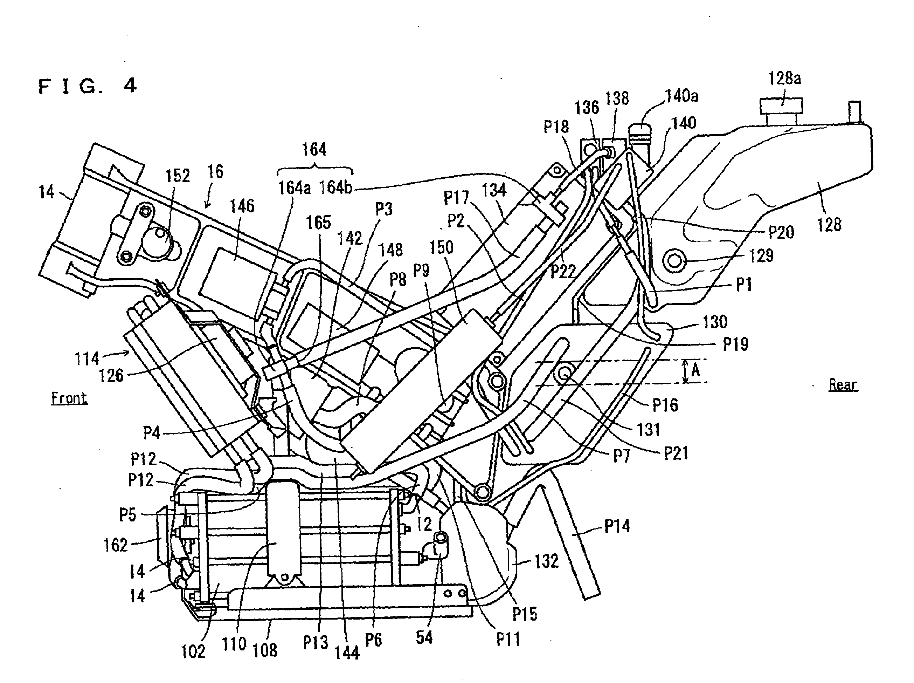

As shown in Fig. 4, etc., the cell stack 102 is placed on a skid 108. The skid 108 is supported by a stay stack 110 hung from the flange 16c of the front frame 16.

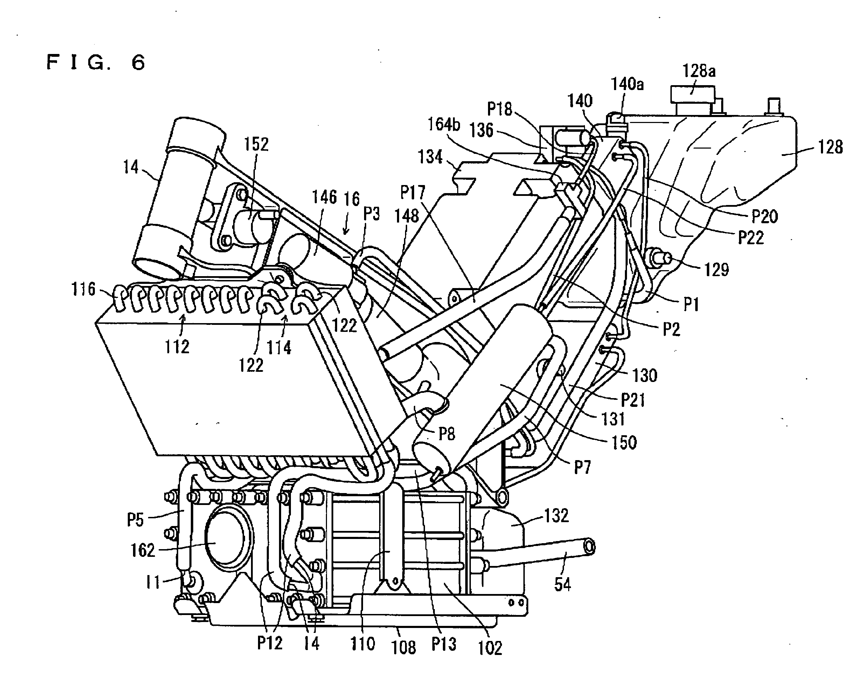

As shown in Fig. 6, an aqueous solution radiator 112 and a gas-liquid separation radiator 114 are disposed below the front frame 16, above the cell stack 102. The radiators 112 and 114 are integral with each other, having a front surface facing ahead of the vehicle in a slightly downward direction. The radiators 112 and 114 have a plurality of plate-like fins (not illustrated) which are perpendicular to the front surface. The radiators 112 and 114 as the above can receive sufficient winds while the vehicle is running.

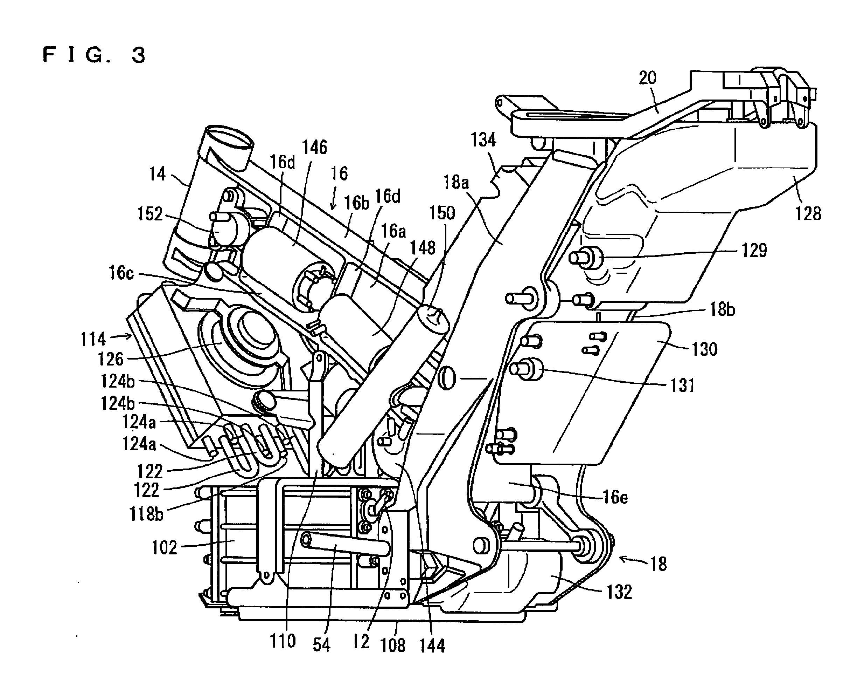

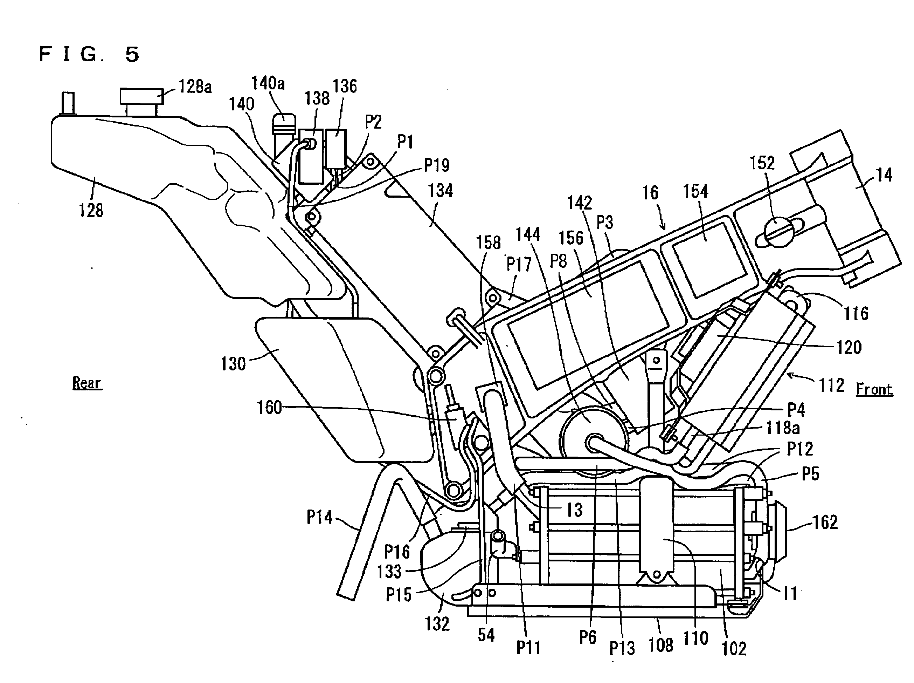

The radiator 112 includes a radiator pipe 116 formed in a swirling pattern as shown in Fig. 6, etc. The radiator pipe 116 is a single continuous pipe formed by welding a plurality of straight pipe members made of stainless steel for example, with a plurality of generally U shaped pipe joints, extending from an inlet 118a (See Fig. 5) through an outlet 118b (See Fig. 3). The radiator 112 has a rear surface faced by a cooling fan 120 opposed to the radiator pipe 116.

Likewise, the radiator 114 includes two radiator pipes 122 each formed in a meander pattern. Each radiator pipe 122 is a single continuous pipe formed by welding a plurality of straight pipe members made of stainless steel for example, with a plurality of generally U shaped pipe joints, extending from an inlet 124a (See Fig. 3) through an outlet 124b (See Fig. 3). The radiator 114 has a rear surface faced by a cooling fan 126 opposed to the radiator pipe 122.

Returning to Fig. 1 through Fig. 7, and referring mainly to Fig. 3, a fuel tank 128, an aqueous solution tank 130 and a water tank 132 are disposed in this order from top to bottom, behind the connecting region 16e of the front frame 16. The fuel tank 128, the aqueous solution tank 130 and the water tank 132 are formed by PE (polyethylene) blow molding, for example.

The fuel tank 128 is below the seat rail 20 and is attached to a rear end of the seat rail 20. The fuel tank 128 contains a methanol fuel (high concentration aqueous solution of methanol) having a high concentration level (containing methanol at approximately 50 wt%, for example) which is used as fuel for the electrochemical reaction in the cell stack 102. The fuel tank 128 has a lid 128a on its upper surface. The lid 128a is removed when replenishing the tank with methanol fuel.

The aqueous solution tank 130 is below the fuel tank 128, and is attached to the rear frame 18. The aqueous solution tank 130 contains aqueous methanol solution, which is a solution of the methanol fuel from the fuel tank 128 diluted to a suitable concentration (containing methanol at approximately 3 wt%, for example) for the electrochemical reaction in the cell stack 102. In other words, the aqueous solution tank 130 contains aqueous methanol solution which is to be sent by the aqueous solution pump 146 (to be described later) to the cell stack 102.

The fuel tank 128 is provided with a level sensor 129 for detecting the height of liquid surface of the methanol fuel in the fuel tank 128. The aqueous solution tank 130 is provided with a level sensor 131 for detecting the height of liquid surface of the aqueous methanol solution in the aqueous solution tank 130. By detecting the height of liquid surfaces with the level sensors 129, 131, the amount of liquids in the tanks can be detected. The liquid surface in the aqueous solution tank 130 is controlled to stay within a range indicated by a letter A in Fig. 4 for example.

The water tank 132 is between the plate members 18a and 18b of the rear frame 18 and behind the cell stack 102. A level sensor 133 is attached to the water tank 132 in order to detect a water level in the water tank 132.

In front of the fuel tank 128 and above the flange 16b of the front frame 16 is a secondary battery 134. The secondary battery 134 is disposed on an upper surface of the plate member (not illustrated) of the rear frame 18. The secondary battery 134 stores the electric energy generated by the cell stack 102, and supplies the stored electric energy to the electric components in response to commands from the controller 156 (to be described later). For example, the secondary battery 134 supplies electric energy to peripheral components and the drive unit 62.

Above the secondary battery 134 and below the seat rail 20 is disposed a fuel pump 136 and a detection valve 138. Further, a catch tank 140 is disposed above the aqueous solution tank 130.

The catch tank 140 has a lid 140a on its upper surface. If the fuel cell system 100 has not ever been started (when the aqueous solution tank 130 is empty) for example, the lid 140a is removed to supply the tank with aqueous methanol solution. The catch tank 140 is formed by PE (polyethylene) blow molding, for example.

An air filter 142 is disposed in a space surrounded by the front frame 16, the cell stack 102 and the radiators 112, 114 for removing impurities such as dust contained in gas. Behind and below the air filter 142 is disposed an aqueous solution filter 144.

As shown Fig. 4, an aqueous solution pump 146 and an air pump 148 are housed in the storage space on the left side of the front frame 16. On the left side of the air pump 148 is an air chamber 150. The aqueous solution pump 146 drives to pump aqueous methanol solution toward the cell stack 102.

Further, as shown in Fig. 5, a main switch 152, a DC-DC converter 154, a controller 156, a rust prevention valve 158 and a water pump 160 are disposed in this order from front to rear in the storage space on the right side of the front frame 16. The main switch 152 penetrates the storage space in the front frame 16 from right to left. In front of the cell stack 102 is a horn 162. The DC-DC converter 154 converts the electric voltage from 24 volts to 12 volts. The 12 volt power is used to drive fans 120, 126.

With the above-described layout, reference will now be made to Fig. 4 through Fig. 7 and Fig. 10 to describe piping in the fuel cell system 100.

The fuel tank 128 and the fuel pump 136 are connected with each other by a pipe P1. The fuel pump 136 and the aqueous solution tank 130 are connected with each other by a pipe P2. The pipe P1 connects a lower end of a left side surface of the fuel tank 128 with a lower end of a left side surface of the fuel pump 136. The pipe P2 connects a lower end of a left side surface of the fuel pump 136 with a lower end of a left side surface of the aqueous solution tank 130. By driving the fuel pump 136, methanol fuel in the fuel tank 128 is supplied to the aqueous solution tank 130 via the pipes P1, P2.

The aqueous solution tank 130 and the aqueous solution pump 146 are connected with each other by a pipe P3. The aqueous solution pump 146 and the aqueous solution filter 144 are connected with each other by a pipe P4. The aqueous solution filter 144 and the cell stack 102 are connected with each other by a pipe P5. The pipe P3 connects a lower corner of a left side surface of the aqueous solution tank 130 with a rear portion of the aqueous solution pump 146. The pipe P4 connects a rear portion of the aqueous solution pump 146 with a left side surface of the aqueous solution filter 144. The pipe P5 connects a right side surface of the aqueous solution filter 144 with an anode inlet I1 located at a right lower corner of a front surface of the cell stack 102. By driving the aqueous solution pump 146, aqueous methanol solution from the aqueous solution tank 130 is pumped from the pipe P3 side toward the pipe P4 side. Then, the aqueous solution filter 144 removes impurities from the aqueous methanol solution, and the solution flows through the pipe P5 to the cell stack 102. According to the present embodiment, the pipes P4 and P5 constitute a guide pipe which guides aqueous methanol solution from the aqueous solution pump 146 to each of the fuel cells 104 in the cell stack 102.

The cell stack 102 and the aqueous solution radiator 112 are connected with each other by a pipe P6, and the radiator 112 and the aqueous solution tank 130 are connected with each other by a pipe P7. The pipe P6 connects an anode outlet I2 located at an upper left corner of a rear surface of the cell stack 102 with an inlet 118a (See Fig. 5) of the radiator pipe 116 which comes out of a right side end of a lower surface of the radiator 112. The pipe P7 connects an outlet 118b (See Fig. 3) of the radiator pipe 116 with an upper corner of a left side surface of the aqueous solution tank 130. The radiator pipe 116 comes out of a lower surface of the radiator 112, from near a left end but slightly closer to the center of the radiator's lower surface. Unused aqueous methanol solution and carbon dioxide discharged from the cell stack 102 flow through the pipe P6 to the radiator 112 where they are cooled, and then returned via the pipe P7 to the aqueous solution tank 130. With this arrangement, the temperature of aqueous methanol solution in the aqueous solution tank 130 can be deceased.

The pipes P1 through P7 serve primarily as a flow path for the fuel.

The air filter 142 and the air chamber 150 are connected with each other by a pipe P8. The air chamber 150 and the air pump 148 are connected with each other by a pipe P9, the air pump 148 and the rust prevention valve 158 are connected with each other by a pipe P10 whereas the rust prevention valve 158 and the fuel cell stack 102 are connected with each other by a pipe P11. The pipe P8 connects a rear portion of the air filter 142 with a portion of the air chamber 150 which is slightly ahead of the center of the chamber. The pipe P9 connects a lower center portion of the air chamber 150 with a rear portion of the air pump 148. The pipe P10 connects the air pump 148 located on the left side of the plate member 16a in the front frame 16 with the rust prevention valve 158 located on the right side of the plate member 16a. The pipe P11 connects the rust prevention valve 158 with a cathode inlet I3 located on an upper right end of a rear surface of the cell stack 102. When the fuel cell system 100 generates power, the rust prevention valve 158 is opened. By driving the air pump 148 under this condition, air containing oxygen is introduced from outside. The introduced air is purified by the air filter 142, then flows through the pipe P8, the air chamber 150 and the pipe P9 to the air pump 148, and then through the pipe P10, the rust prevention valve 158 and the pipe P11, and is supplied to the cell stack 102. The rust prevention valve 158 is closed when the fuel cell system 100 is stopped, prevents backflow of water vapor into the air pump 148 and thereby prevents rusting of the air pump 148.

The cell stack 102 and the gas-liquid separation radiator 114 are connected with each other by two pipes P12. The radiator 114 and the water tank 132 are connected with each other by two pipes P13. The water tank 132 is provided with a pipe (exhaust pipe) P14. Each of the pipes P12 connects a cathode outlet I4 located on a lower left corner of a front surface of the cell stack 102 with an inlet 124a (See Fig. 3) of a corresponding radiator pipe 122 which comes out from a left side end of a lower surface of the radiator 114. Each of the pipes P13 connects an outlet 124b (See Fig. 3) of a corresponding one of the radiator pipes 122 with an upper portion of a front surface of the water tank 132. The radiator pipes 122 come out of the lower surface of the radiator 114, at a location slightly closer to the center than the left side end. The pipe P14 is connected with an upper portion of a rear surface of the water tank 132, and is angled so it goes up and then down. Exhaust gas which is discharged from the cathode outlet 14 of the cell stack 102 contains water (liquid water and water vapor) and carbon dioxide. The exhaust gas flows through the pipe P12 into the radiator 114, where water vapor is liquefied. After leaving the radiator 114, the exhaust gas flows together with the water through the pipe P13 into the water tank 132, before being discharged to the outside via the pipe P14.

The pipes P8 through P14 serve primarily as a flow path for the exhaust gas.

The water tank 132 and the water pump 160 are connected with each other by a pipe P15 whereas the water pump 160 and the aqueous solution tank 130 are connected with each other by a pipe P16. The pipe P15 connects a lower portion of a right side surface of the water tank 132 with a center portion of the water pump 160. The pipe P16 connects a center portion of the water pump 160 with an upper corner of a left side surface of the aqueous solution tank 130. By driving the water pump 160, water in the water tank 132 is returned to the aqueous solution tank 130 via the pipes P15, P16.

The pipes P15, P16 serve as a flow path for the water.

The pipe P4 is connected with the pipe P17 so as to receive part of aqueous methanol solution which is pumped by the aqueous solution pump 146 and is flowing through the pipe P4. As shown in Fig. 4, an ultrasonic sensor 164 is attached to the pipe P17 for measuring methanol concentration in the aqueous methanol solution in the pipe P17. The ultrasonic sensor 164 is used for measuring the methanol concentration of the aqueous methanol solution in the pipe P17, based on the principle that the ultrasonic wave travels at different speeds depending on the methanol concentration of aqueous methanol solution (methanol percentage in the aqueous methanol solution) which is flowing in the pipe.

As shown in Fig. 4, the ultrasonic sensor 164 has a transmitter unit 164a which transmits an ultrasonic wave, and a receiver unit 164b which detects the ultrasonic wave. The transmitter unit 164a is inserted into the pipe P4. The transmitter unit 164a has a prong 165 which is connected with a starting end of the pipe P17. Through the prong 165, methanol aqueous solution is introduced into the pipe P17. The receiver unit 164b is connected with a tail end of the pipe P17, and is disposed on the left side surface of the secondary battery 134. The ultrasonic sensor 164 generates an ultrasonic wave at the transmitter unit 164a, receives the ultrasonic wave at the receiver unit 164b, detects an ultrasonic wave propagation speed based on the amount of time from the start of ultrasonic wave generation at the transmitter unit 164a to the reception of the ultrasonic wave at the receiver unit 164b, and converts the propagation speed into a voltage value which represents physical concentration information. Based on this concentration information, the controller 156 detects a methanol concentration of the aqueous methanol solution in the pipe P17.

The receiver unit 164b and the detection valve 138 are connected with each other by a pipe P18. The detection valve 138 and the aqueous solution tank 130 are connected with each other by a pipe P19. The pipe P18 connects an upper surface of the receiver unit 164b with a left side surface of the detection valve 138. The pipe P19 connects a right side surface of the detection valve 138 with an upper surface of the aqueous solution tank 130.

The pipes P17 through P19 serve as a flow path primarily for concentration detection.

The aqueous solution tank 130 and the catch tank 140 are connected with each other by a pipe P20. The catch tank 140 and the aqueous solution tank 130 are connected with each other by a pipe P21. The catch tank 140 and the air chamber 150 are connected with each other by a pipe P22. The pipe P20 connects an upper corner of a left side surface of the aqueous solution tank 130 with an upper corner of a left side surface of the catch tank 140. The pipe P21 connects a lower end of the catch tank 140 with a lower corner of a left side surface of the aqueous solution tank 130. The pipe P22 connects a location of a left side surface of the catch tank 140 closer to an upper portion thereof, with an upper end surface of the air chamber 150. Gas (main ingredients are carbon dioxide, gaseous methanol and water vapor) in the aqueous solution tank 130 is supplied to the catch tank 140 via the pipe P20. The gaseous methanol and the water vapor are cooled and liquefied in the catch tank 140, then flow through the pipe P21 back to the aqueous solution tank 130. Gas (carbon dioxide, methanol which was not liquefied and water vapor) in the catch tank 140 is supplied to the air chamber 150 via the pipe P22.

The pipes P20 through P22 constitute a flow path primarily for fuel processing.

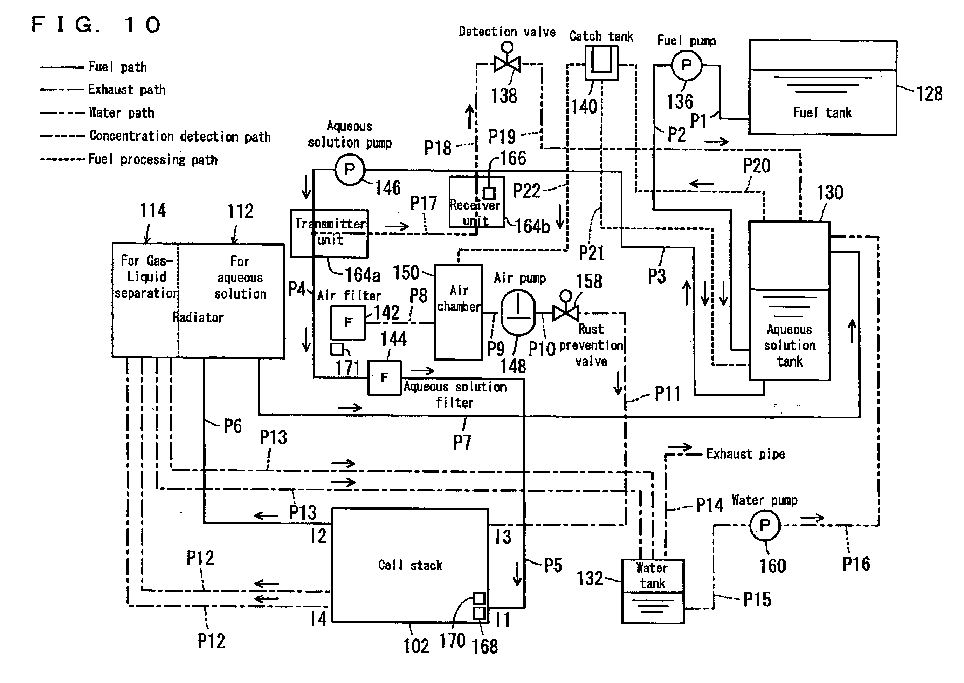

As shown in Fig. 10, the receiver unit 164b of the ultrasonic sensor 164 is provided with a first temperature sensor 166 for detecting the temperature of aqueous methanol solution that is flowing through the ultrasonic sensor 164. Near an anode inlet I1 of the cell stack 102, there are provided a voltage sensor 168 for detecting concentration information which represents the concentration of aqueous methanol solution supplied to the cell stack 102 by using electrochemical characteristics of the aqueous methanol solution, and a second temperature sensor 170 for detecting the temperature of the aqueous methanol solution supplied to the cell stack 102. Further, an ambient temperature sensor 171 for detecting the ambient temperature is provided near an air filter 142. The voltage sensor 168 detects an open circuit voltage of the fuel cell (individual fuel cell) 104 which represents the electrochemical concentration information.

Description will now cover an electrical configuration of the fuel cell system 100 while making reference to Fig. 11.

The controller 156 of the fuel cell system 100 includes: a CPU 172 for performing necessary calculations and controlling operations of the fuel cell system 100; a clock circuit 174 which provides the CPU 172 with clock signals; a memory 176 provided by e.g. an EEPROM for storing programs and data for controlling the operations of the fuel cell system 100 as well as calculation data, etc.; a reset IC 178 for preventing erroneous operation of the fuel cell system 100; an interface circuit 180 for connection with external components; a voltage detection circuit 184 for detecting a voltage in an electric circuit 182 which connects the cell stack 102 with the electric motor 60 that drives the motorbike 10; a current detection circuit 186 for detecting an electric current which passes through the fuel cell 104 i.e. the cell stack 102; an ON/OFF circuit 188 for opening and closing the electric circuit 182; a voltage protection circuit 190 for protecting the electric circuit 182 from overvoltage; a diode 192 placed in the electric circuit 182; and a power source circuit 194 for providing the electric circuit 182 with a predetermined voltage.

The CPU 172 of the controller 156 as described above is supplied with detection signals from the ultrasonic sensor 164, the voltage sensor 168, the first temperature sensor 166, the second temperature sensor 170 and the ambient temperature sensor 171, a detected voltage value from the voltage detection circuit 184 and a detected current value from the current detection circuit 186. The CPU 172 is also supplied with detection signals from a roll-over switch 196 which detects if the vehicle is rolled over, input signals from a main switch 152 which turns ON or OFF the electric power, and other signals from the input portion 30c for various settings and information entry. Further, the CPU 172 is supplied with detection signals from the level sensors 129, 131 and 133.

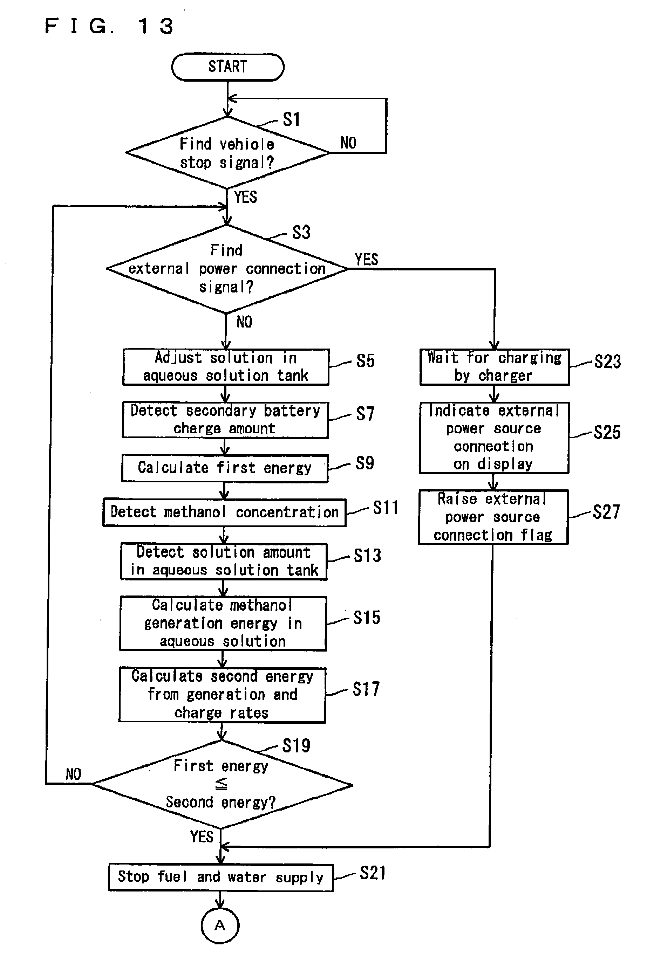

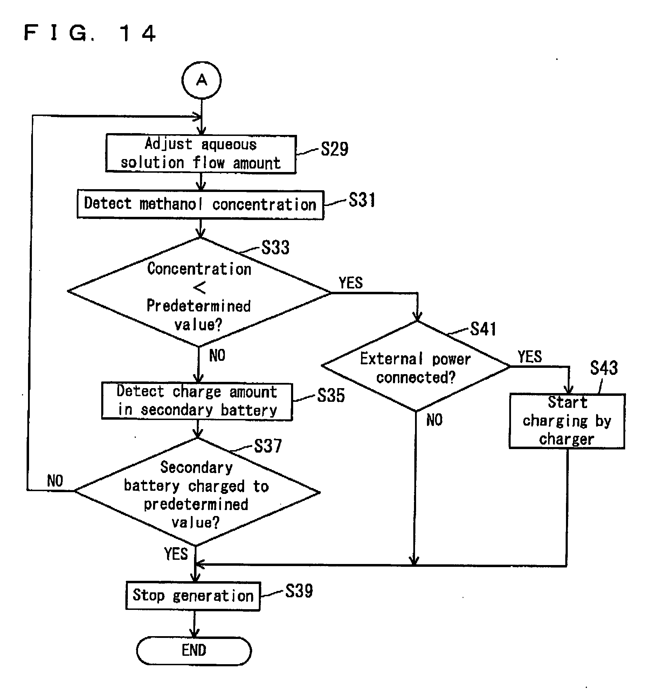

The memory 176 which serves as storage means stores: programs for performing operations depicted in Fig. 13 and Fig. 14 as well as calculation data, etc.; conversion information for converting physical concentration information (a voltage which indicates an ultrasonic propagation speed) of the aqueous methanol solution obtained by the ultrasonic sensor 164 into a concentration; and conversion information for converting electrochemical concentration information (the open circuit voltage of the fuel cell 104) of the aqueous methanol solution obtained by the voltage sensor 168 into a concentration. The conversion information may be table data which relate sensor output information to corresponding concentrations.

Further, the memory 176 stores a generation efficiency value and a charge efficiency value for calculating second energy which is an amount of power to be generated from aqueous methanol solution in the aqueous solution tank 130 for charging the secondary battery 134. Further, the memory 176 stores a predetermined concentration value of the aqueous methanol solution, a predetermined value as a target value for the secondary battery 134, and an external power source connection flag.

The CPU 172 controls system components such as the fuel pump 136, the aqueous solution pump 146, the air pump 148, the water pump 160, the cooling fans 120 and 126, the detection valve 138 and the rust prevention valve 158. The CPU 172 also controls the display portion 30b which displays various information for the motorbike rider.

The cell stack 102 is connected with the secondary battery 134 and the drive unit 62. The secondary battery 134 and the drive unit 62 are connected with the electric motor 60. The secondary battery 134 complements the output from the cell stack 102, by being charged with electric energy from the cell stack 102 and discharging the electric energy to supply power to the electric motor 60 and the system components.

The electric motor 60 is connected with the meter 30a for measuring various data concerning the electric motor 60. The data and status information of the electric motor 60 obtained by the meter 30a are supplied to the CPU 172 via the interface circuit 198.

In addition, a charger 200 is connectable with the interface circuit 198. The charger 200 is connectable with an external power source (commercial power source) 202. When the interface circuit 198 is connected with the external power source 202 via the charger 200, i.e. when the fuel cell system 100 is connected with the external power source 202, an external power source connection signal is sent via the interface circuit 198 to the CPU 172. The charger 200 has a switch 200a which can be turned ON/OFF by the CPU 172. When the switch 200a is turned ON, with the fuel cell system 100 connected with the external power source 202, the external power source 202 and the secondary battery 134 are electrically connected with each other.

In the present embodiment, the aqueous solution circulation means includes the aqueous solution tank 130, the pipes P3, P4, P5, P6 and P7, and the aqueous solution pump 146. The fuel supply means includes the fuel tank 128, the pipes P1, P2 and the fuel pump 136. The water supply means includes the water tank 132, the pipes P15, P16 and the water pump 160. The main switch 152 serves as the instruction means. The CPU 172 serves as the first control means, the second control means, the third control means, the first calculation means and the second calculation means. The memory 176 serves as the storage means. The charge amount detector 65 serves as the charge amount detection means. The voltage sensor 168, the CPU 172 and the memory 176 serve as the concentration detection means. Or, the ultrasonic sensor 164, the CPU 172 and the memory 176 serve as the concentration detection means. The aqueous solution amount detection means includes the level sensor 131 and the CPU 172. The charger 200 and the external power source 202 serve as the charge means.

Next, a main process of the fuel cell system 100 in operation (power generation) will be described.

When the main switch 152 is turned ON, the fuel cell system 100 drives its components such as the aqueous solution pump 146 and the air pump 148, thereby starting the operation.

As the aqueous solution pump 146 is driven, aqueous methanol solution stored in the aqueous solution tank 130 is sent from the pipe P3 side to the pipe P4 side, into the aqueous solution filter 144. The aqueous solution filter 144 removes impurities and so on from the aqueous methanol solution, then the aqueous methanol solution is sent through the pipe P5 and the anode inlet 11, and then supplied directly to the anode 104b in each of the fuel cells 104 which constitute the cell stack 102.

Meanwhile, as the air pump 148 is driven, air is introduced through the air filter 142 and flows through the pipe P8 into the air chamber 150 where noise is silenced. The air which was introduced and gas which was supplied to the air chamber 150 from the catch tank 140 are supplied via the pipes P9 through P11 and the cathode inlet 13 to the cathode 104c in each of the fuel cells 104 which constitute the cell stack 102.

At the anode 104b in each fuel cell 104, methanol and water in the supplied aqueous methanol solution chemically react with each other to produce carbon dioxide and hydrogen ions. The produced hydrogen ions flow to the cathode 104c via the electrolyte film 104a, and electrochemically react with oxygen in the air supplied to the cathode 104c, to produce water (water vapor) and electric energy. Thus, power generation is performed in the cell stack 102. The generated electric energy is sent to and stored at the secondary battery 134, and is used, for example, to drive the motorbike 10.

Carbon dioxide produced at the anode 104b in each fuel cell 104 and unused aqueous methanol solution are heated (up to approximately 65°C-70°C for example) in the electrochemical reaction, and part of the unused aqueous methanol solution is vaporized. The carbon dioxide and the unused aqueous methanol solution flow from the anode outlet I2 of the cell stack 102 into the aqueous solution radiator 112, where they are cooled (down to approximately 40°C for example) by the fan 120 while flowing through the radiator pipe 116. The carbon dioxide and the unused aqueous methanol solution which have been cooled then flow through the pipe P7, and return to the aqueous solution tank 130.

Meanwhile, most of the water vapor occurred on the cathode 104c in each fuel cell 104 is liquefied and discharged in the form of water from the cathode outlet I4 of the cell stack 102, with saturated water vapor being discharged in the form of gas. Part of the water vapor that was discharged from the cathode outlet 14 is cooled in the radiator 114 and liquefied as its temperature decreases to or below the dew point. The radiator 114 liquefies the water vapor through operation of the fan 126. Water (liquid water and water vapor) from the cathode outlet 14 are supplied via the pipe P12, the radiator 114 and the pipe P13 to the water tank 132 together with unused air.

Also, at the cathode 104c in each fuel cell 104, the vaporized methanol from the catch tank 140 and methanol which has moved to the cathode due to crossover react with oxygen in the platinum catalyst layer, thereby being decomposed to harmless substances of water and carbon dioxide. The water and carbon dioxide, which were produced from the methanol are discharged from the cathode outlet I4, and supplied to the water tank 132 via the radiator 114. Further, water that has moved due to water crossover to the cathode 104c in each fuel cell 104 is discharged from the cathode outlet I4, and supplied to the water tank 132 via the radiator 114.

The water collected in the water tank 132 is recycled appropriately by the pumping operation of the water pump 160, through the pipes P15, P16 to the aqueous solution tank 130, and is used as water for the aqueous methanol solution.

While the fuel cell system 100 is in operation, a concentration detection routine for aqueous methanol solution is performed regularly for efficient power generation by each fuel cell 104 while preventing the fuel cell 104 from premature deterioration. Based on the detection result, adjustment is made on the methanol concentration of aqueous methanol solution in the aqueous solution tank 130 which is to be supplied to the cell stack 102, to 3 wt.% approx. for example. Specifically, the controller 156 controls the fuel pump 136 and the water pump 160, whereby methanol fuel is supplied from the fuel tank 128 to the aqueous solution tank 130 whereas water is returned from the water tank 132 to the aqueous solution tank 130 based on the detection result of the methanol concentration.

Description will now cover an operation of the fuel cell system 100 described as the above, from the time when the main switch 152 is turned OFF to the time when power generation in the cell stack 102 ceases.

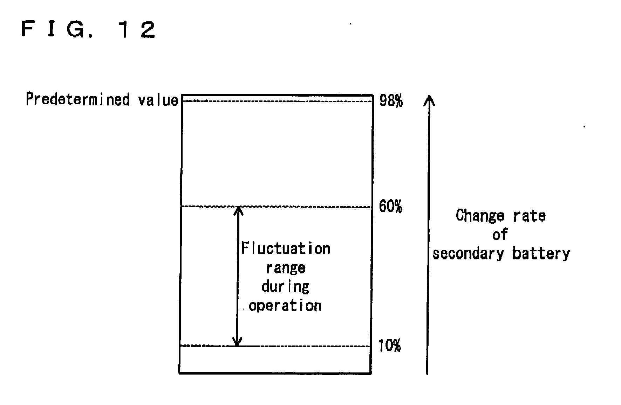

Note that as shown in Fig.12, adjustment is performed to the charge rate (a ratio of the amount of charge to the full amount of charge) in the secondary battery 134, within a range of e.g., about 10% to about 60% while the motorbike 10 is in operation, and with a target of achieving a predetermined value (98% in the present embodiment) at the end of the operation.

Referring to Fig. 13 and Fig. 14, first, the CPU 172 checks if the main switch 152 has been turned OFF (Step S1). This is determined by checking if the CPU 172 has received a vehicle shutdown signal which indicates that the main switch 152 was turned OFF. The system assumes a stand-by status until the main switch 152 is turned OFF, and when the main switch 152 is turned OFF, the CPU 172 checks if the fuel cell system 100 is connected with an external power source 202 (Step S3). This is determined by checking if the CPU 172 has received an external power source connection signal which is a signal sent from the interface circuit 198 when a connection between the interface circuit 198 and the external power source 202 is established via the charger 200.

If the fuel cell system 100 is not connected with an external power source 202, the CPU 172 controls the fuel pump 136 and the water pump 160, thereby adjusting the amount of aqueous solution and the concentration of the aqueous solution in the aqueous solution tank 130 (Step S5). Thereafter, the amount of charge in the secondary battery 134 is detected by the charge amount detector 65 (Step S7), and based on the amount of charge, the CPU 172 can easily calculate the first energy (a required amount of charge) necessary for charging the secondary battery 134 to a predetermined value (Step S9).

Next, the voltage sensor 168 obtains concentration information of aqueous methanol solution. The CPU 172 converts the concentration information into a concentration based on the conversion information in the memory 176, thereby obtaining a methanol concentration (Step S11). Then, based on the level of the aqueous solution tank 130 detected by the level sensor 131, the CPU 172 obtains an amount of aqueous methanol solution (Step S13). Based on the methanol concentration and the amount of aqueous methanol solution, the CPU 172 calculates methanol generation energy which is an amount that can be generated from the methanol in the aqueous solution (Step S15). Further, the CPU 172 calculates the second energy (the amount of charge) easily and accurately by multiplying the methanol generation energy with the generation efficiency and the charge efficiency (through multiplication) (Step S17). It should be noted that multiplying the methanol generation energy with the generation efficiency and the charge efficiency represents virtual subtraction of consumed energy such as electric power spent for the power generation, from the methanol generation energy.

Here, the generation efficiency is a value that is predetermined in consideration of the electric power, etc. required for driving system components, such as the air pump 148, necessary for operating the cell stack 102. In the present embodiment, the value is set about to 15%. In other words, about 15% of the energy stored in the aqueous methanol solution in the aqueous solution tank 130 can be used for charging the secondary battery 134.

The charge efficiency is a value that is predetermined in consideration of charging loss due to chemical reactions in charging of the secondary battery 134. In the present embodiment, the value is set to about 95% to about 98%.

Therefore, the second energy, which can be used for charging, is about 14% to about 15% of the energy stored in the aqueous solution tank 130.

Then, the CPU 172 checks if the first energy is not greater than the second energy (Step S19). If the first energy is not greater than the second energy, the CPU 172 stops the supply of methanol fuel from the fuel tank 128 and the supply of water from the water tank 132 (Step S21).

On the other hand, if the first energy is greater than the second energy, the process goes back to Step S3.

If Step S3 finds that the fuel cell system 100 is connected with an external power source 202, i.e. if the interface circuit 198 is connected with an external power source 202 via the charger 200, the CPU 172 turns the switch 200a OFF, setting the charger 200 to a charge stand-by state in which charging does not begin yet (Step S23). Then, the display portion 30b provides an indication that the fuel cell system 100 is connected with an external power source 202 (Step S25), and the external power source connection flag is raised as an indicator that the fuel cell system 100 is connected with an external power source 202 (Step S27). Thereafter, the process goes to Step S21, where supply of methanol fuel from the fuel tank 128 and of water from the water tank 132 is stopped.

As described, if the interface circuit 198 is connected with an external power source 202 via the charger 200, supply of methanol fuel from the fuel tank 128 and of water from the water tank 132 is stopped in order to reduce unnecessary consumption of fuel since the system can be charged by the external power source 202. However, if the power generation by the cell stack 102 is also stopped soon after the external power source 202 is connected, crossover occurs after stopping the power generation, due to a high concentration of the aqueous solution. Therefore, power generation is continued for some time after the connection, before starting the charge.

As described above, as the supply of methanol fuel from the fuel tank 128 and of water from the water tank 132 is stopped in Step S21, the concentration in the aqueous methanol solution in the aqueous solution tank 130 decreases. Therefore, the CPU 172 controls the aqueous solution pump 146 thereby increasing the flow of the aqueous methanol solution so that there will be no shortage of methanol contained in the aqueous solution at the anode 104b (Step S29).

Then, the concentration of the aqueous methanol solution is detected via the voltage sensor 168 (Step S31), the CPU 172 checks if the concentration of the aqueous solution is lower than a predetermined concentration (1% in the present embodiment) (Step S33). If the concentration of the aqueous solution is not lower than the predetermined concentration, the charge amount detector 65 detects the amount of charge in the secondary battery 134 (Step S35), and the CPU 172 checks if the secondary battery 134 is charged to the predetermined value (Step S37). If the secondary battery 134 has not yet charged to the predetermined value, the process goes back to Step S29, whereas if the charging has been made to the predetermined value, the CPU 172 stops the power generation immediately in order to avoid overcharging of the secondary battery 134 (Step S39), and the process comes to an end. As described, the amount of charge in the secondary battery 134 consumed during the operation is replenished by charging the secondary battery 134 to a predetermined value (about 98% for example) before stopping the power generation in the cell stack 102.

On the other hand, if Step S33 finds that the concentration of the aqueous solution is not greater than the predetermined concentration, the system checks if the interface circuit 198 is connected with an external power source 202 via the charger 200 (Step S41). This is performed by checking if the external power source connection flag is set or not. If there is no external power source 202 connected, the process goes to Step S39 to stop power generation immediately, and then ceases. If there is an external power source 202 connected, the CPU 172 turns ON the switch 200a, thereby starting the charge by the charger 200 (Step S43), and thereafter, power generation is stopped in Step S39, and the process comes to an end.

According to the fuel cell system 100 as described above, fuel supply to the aqueous solution tank 130 is stopped and power generation is continued if the first energy is smaller than the second energy after the main switch 152 is turned OFF. Thereafter, the concentration of aqueous methanol solution is decreased to a value lower than before the main switch 152 was turned OFF, and then the power generation in the cell stack 102 is stopped. It should be noted here that the fuel cell system 100 is capable of recycling aqueous methanol solution from the cell stack 102 to the aqueous solution tank 130. Therefore, continued power generation without the fuel supply to the aqueous solution tank 130 decreases the concentration of aqueous methanol solution generally uniformly in all parts of circulation. Hence, it is possible to ensure that when stopping power generation in the cell stack 102, the concentration of aqueous methanol solution supplied to the cell stack 102 is lower than before the main switch 152 was turned OFF, and thus to reduce non-uniformity in the concentration of aqueous methanol solution in the electrolyte film surface thereby reducing methanol crossover as well as preventing premature deterioration of the electrolyte film 104a.

Also, it is generally possible that at the end of power generation, the secondary battery is charged to a predetermined value, which ensures reliable start up next time. The power generation in the cell stack 102 is stopped if the concentration of aqueous methanol solution comes below the predetermined concentration before the secondary battery has been charged to the predetermined value, which enables to reliably reduce deterioration of the electrolyte film 104a.

Further, by continuing power generation without water supply to the aqueous solution tank 130 after the main switch 152 is turned OFF, the concentration of aqueous methanol solution in the aqueous solution tank 130 is decreased gradually and only by power generation. This enables to avoid such a disadvantage that power generation by the cell stack 102 is stopped before the secondary battery 134 has been charged sufficiently.

The system stops methanol fuel supply to the aqueous solution tank 130 when an external power source 202 for charging the secondary battery 134 is connected with the fuel cell system 100. By prioritizing the charging by the external power source 202 and stopping the methanol fuel supply as described, it becomes possible to prevent unnecessary consumption of the fuel.

According to the present invention, crossover of aqueous methanol solution and deterioration of the electrolyte film 104a are reliably reduced. Therefore, the present invention can be used suitably in a motorbike 10 as well as in other transportation equipment such as automobiles, marine vessels, etc. which includes a fuel cell system 100.

It should be noted here that according to the above-described embodiment, the amount of aqueous solution in the aqueous solution tank 130 is used as the amount of the aqueous solution for calculating the second energy. However, the present invention is not limited to this. For example, the amount of aqueous solution in the aqueous solution circulation means excluding the aqueous solution tank 130, i.e. the amount in the circulation flow path constituted by the pipe P6, the radiator 112, the pipes P7, P3, the aqueous solution pump 146, the pipe P4, the aqueous solution filter 144, and the pipe P5 is a known amount, so this amount may be added to the amount of the aqueous solution in the aqueous solution tank 130. This enables more accurate calculation of the second energy obtainable from the aqueous methanol solution in the aqueous solution circulation means.

Further, as long as the liquid level in the aqueous solution tank 130 is controlled at a constant level, the second energy is substantially constant not only when the second energy is calculated from the amount of the aqueous solution in the aqueous solution tank 130 but also when the second energy is calculated from a total of the amount of the aqueous solution in the aqueous solution tank 130 and the amount of the aqueous solution in the circulation flow path. In this case therefore, the second energy may be stored in advance as a known value in the memory 176. This eliminates the need for calculating the second energy.

In Step S21 of the operation shown in Fig.13, the supply operation by the fuel pump 136 is stopped. However, the amount of fuel supply from the fuel pump 136 may be decreased without stopping the fuel pump 136. Also in Step S21, the amount of water supply from the water pump 160 may be decreased without stopping the water pump 160.

Further, in Step S11 shown in Fig. 13 and in Step S31 shown in Fig. 14, the concentration of the aqueous methanol solution may be detected by using the ultrasonic sensor 164, the CPU 172 and the memory 176, or by another means. The concentration conversion information may be a calculation formula for converting the concentration information into a concentration.

Further, in the above-described embodiment, the CPU 172 serves as the first through the third control means. However, the present invention is not limited to this. For example, the first through the third control means may be provided by individual CPUs.

The embodiment described above uses methanol as fuel and aqueous methanol solution as aqueous fuel solution. However the present invention is not limited by this. For example, the fuel may be provided by other alcoholic fuel such as ethanol, and the aqueous fuel solution may be provided by aqueous solution of the alcohol, such as aqueous ethanol solution.

The present invention being thus far described and illustrated in detail, it is obvious that these description and drawings only represent examples of the present invention, and should not be interpreted as limiting the invention. The spirit and scope of the present invention is only limited by words used in the accompanied claims.

## Claims

1. A fuel cell system comprising:
a fuel cell including an electrolyte film, for generation of electric energy by electrochemical reactions;
aqueous solution circulation means for circulatory supply of aqueous fuel solution to the fuel cell;
fuel supply means for supplying the aqueous solution circulation means with fuel which has a concentration not lower than that of the aqueous fuel solution;
instruction means for issuing an instruction to stop power generation in the fuel cell;
first control means for controlling fuel supply operation of the fuel supply means to decrease an amount of fuel supply to the aqueous solution circulation means while continuing circulation of the aqueous fuel solution and the power generation after an issuance of the instruction from the instruction means to stop power generation; and
second control means for controlling power generation operation of the fuel cell to stop power generation at a concentration of the aqueous fuel solution lower than before the issuance of the instruction to stop power generation, after a decrease in the amount of fuel supply to the aqueous solution circulation means.

2. The fuel cell system according to Claim 1, further comprising a secondary battery charged by the fuel cell, and
charge amount detection means for detecting an amount of charge in the secondary battery,
wherein the second control means controls power generation operation of the fuel cell based on a result of detection by the charge amount detection means.

3. The fuel cell system according to Claim 1, further comprising concentration detection means for detecting a concentration of the aqueous fuel solution supplied to the fuel cell,
wherein the second control means controls power generation operation of the fuel cell based on a result of detection by the concentration detection means.

4. The fuel cell system according to Claim 1, further comprising a secondary battery charged by the fuel cell,
first calculation means for calculating a first energy as an amount of charge necessary for charging the secondary battery to a predetermined value, and
second calculation means for calculating a second energy as an amount of power generation capable of charging the secondary battery using the aqueous fuel solution in the aqueous solution circulation means,
wherein the first control means controls fuel supply operation of the fuel supply means based on a comparison between the first energy and the second energy.

5. The fuel cell system according to Claim 1, further comprising a secondary battery charged by the fuel cell,
first calculation means for calculating a first energy as an amount of charge necessary for charging the secondary battery to a predetermined value, and
storage means for storing a second energy as an amount of power generation capable of charging the secondary battery using the aqueous fuel solution in the aqueous solution circulation means,
wherein the first control means controls fuel supply operation of the fuel supply means based on a comparison between the first energy and the second energy.

6. The fuel cell system according to Claim 4 or 5, further comprising charge amount detection means for detecting an amount of charge in the secondary battery,
wherein the first calculation means calculates the first energy based on a result of detection by the charge amount detection means.

7. The fuel cell system according to Claim 4, further comprising aqueous solution amount detection means for detecting an amount of aqueous solution in the aqueous solution circulation means, and
concentration detection means for detecting a concentration of the aqueous fuel solution supplied to the fuel cell,
wherein the second calculation means calculates the second energy based on a result of detection by the aqueous solution amount detection means and a result of detection by the concentration detection means.

8. The fuel cell system according to Claim 7, wherein the second calculation means takes into account electric power consumed in power generation by the fuel cell in the calculation of the second energy.

9. The fuel cell system according to Claim 1, wherein the first control means controls the aqueous solution circulation means to increase an amount of supply of the aqueous fuel solution to the fuel cell after the issuance of the instruction from the instruction means to stop power generation.

10. The fuel cell system according to Claim 1, further comprising water supply means for supplying water to the aqueous solution circulation means, and
third control means for controlling water supply operation of the water supply means to decrease an amount of water supply to the aqueous solution circulation means after the issuance of the instruction from the instruction means to stop power generation.

11. The fuel cell system according to Claim 1, further comprising a secondary battery charged by the fuel cell,
wherein the first control means controls fuel supply operation of the fuel supply means based on presence or absence of a connection between the fuel cell system and an external power source which is to charge the secondary battery.

12. A motorbike comprising the fuel cell system according to one of Claims 1, through 11.

13. Transportation equipment comprising the fuel cell system according to one of Claims 1 through 11.

14. A method of operating a fuel cell system which includes a fuel cell including an electrolyte film and aqueous solution circulation means for circulatory supply of aqueous fuel solution to the fuel cell and is capable of supplying the aqueous solution circulation means with fuel having a concentration not lower than that of the aqueous fuel solution, the method comprising:
a first step of continuing power generation in the fuel cell while continuing the circulation of aqueous fuel solution with a decreased amount of fuel supply to the aqueous solution circulation means after an issuance of an instruction to stop power generation in the fuel cell; and
a second step, thereafter, of stopping the power generation in the fuel cell at a concentration of the aqueous fuel solution lower than before the issuance of the instruction to stop power generation.
